Europäisches Patentamt

European Patent Office

Office européen des brevets

(19)

(11) Veröffentlichungsnummer: **0 131 777**
**B1**

(12) **EUROPÄISCHE PATENTSCHRIFT**

(45) Veröffentlichungstag der Patentschrift:
27.08.86

(51) Int. Cl.⁴: **A 01 K 1/062**

(21) Anmeldenummer: **84106999.0**

(22) Anmeldetag: **19.06.84**

(54) Selbstfanghalsrahmen für Tiere.

(30) Priorität: **21.06.83 DE 3322217**

(43) Veröffentlichungstag der Anmeldung:
**23.01.85 Patentblatt 85/4**

(45) Bekanntmachung des Hinweises auf die Patenterteilung:
**27.08.86 Patentblatt 86/35**

(84) Benannte Vertragsstaaten:
**DE**

(56) Entgegenhaltungen:
**DE - A - 3 136 861**
**DE - U - 7 019 385**

(73) Patentinhaber: **SUEVIA HAIGES GMBH & CO.,**
**Postfach 1108 Max-Eyth-Strasse,**
**D-7125 Kirchheim/Neckar (DE)**

(72) Erfinder: **Verholen, August, Kirchenacker 18,**
**D-4192 Kalkar/Ndrh. 4 (DE)**
Erfinder: **Haiges, Adolf, Hölderlinstrasse 10,**
**D-7124 Bönnigheim (DE)**

(74) Vertreter: **Wolff, Michael, Dipl.-Phys., Kirchheimer**
**Strasse 69, D-7000 Stuttgart 75 (DE)**

## Beschreibung

Die Erfindung betrifft einen Selbstfanghalsrahmen für grössere Tiere, insbesondere Rinder, mit einem in einem Tierstand aufhängbaren Traggestell; mit zwei in einer im wesentlichen vertikalen Ebene liegenden zweiarmigen Öffnungshebeln, die symmetrisch zu einer vertikalen Ebene angeordnet sind, welche auf der Ebene der Öffnungshebel senkrecht steht, und welche an ihren oberen Enden um zur Symmetrieebene parallele, im wesentlichen waagrechte Achsen drehbar am Traggestell gelagert sind; mit zwei in der Ebene der Öffnungshebel symmetrisch zur Symmetrieebene angeordneten, zweiarmigen Schliesshebeln, die mit ihren oberen Enden mit den unteren Enden der Öffnungshebel gelenkig verbunden und an ihren unteren Enden angelenkt sind, wobei die Anlenkungsstelle(n) mittels eines biegsamen Stranges mit dem Stallboden verbunden ist/sind; mit einem am Traggestell angeordneten Schloss zum reversiblen Verriegeln der Öffnungshebel in deren im wesentlichen vertikaler Schliessstellung und mit einem Seilzug zum Entriegeln des Schlosses, welcher am Knie eines Kniehebels angreift, dessen Arme an den oberen Enden der Öffnungshebel oberhalb der Drehpunkte dieser Öffnungshebel angelenkt und im Schliesszustand gestreckt sind.

Die Anmelderin hat sich unter Bezugnahme auf die ältere Anmeldung Nr. 3322217.7 in der Bundesrepublik Deutschland freiwillig eingeschränkt und gesonderte Patentansprüche für die Bundesrepublik Deutschland vorgelegt.

Bei einem aus der DE-A-31 36 861 (Fig. 1, 2 mit 10, 11) bekannten Selbstfanghalsrahmen dieser Art sind die Kniehebelarme (39) gleich lang und greift das Zugseil (38) exakt am Knie des Kniehebels (39, 39) an. Zur Unterstützung der umkehrbaren Spreizbewegung der die Öffnungs- und Schliesshebel (10) beziehungsweise (7) verbindenden Gelenke (9) sind die Öffnungshebel mit einer Feder (Zugefeder 22 oder Druckfeder 22a) versehen, die während des Öffnens und Schliessens des Selbstfanghalsrahmens ein Maximum an Expansion beziehungsweise Kompression erfährt, dessen Überschreitung den Schliess- beziehungsweise Öffnungszustand des Rahmens herbeiführt, der im Falle eines einzelnen Rahmens beispielsweise durch ein Klinkengesperr gesichert wird.

An dem bekannten Selbstfanghalsrahmen ist deshalb nachteilig, dass entweder eine sogenannte Gruppenauslösung, das heisst das gleichzeitige Öffnen mehrerer Rahmen, nicht möglich ist, oder dass schon die Einzelauslösung, erst recht aber die Gruppenauslösung, einen verhältnismässig grossen Zugkraftaufwand erfordert, der über den Seilzug aufzubringen ist.

Der Erfindung liegt daher die Aufgabe zugrunde, einen Selbstfanghalsrahmen zu schaffen, der nicht nur einen zuverlässigen Selbstfang des Tieres, sondern auch eine sichere Verriegelung der Öffnungshebel in deren Schliessstellung und eine leichtgängige Aufschwenkung derselben nach Entriegelung gewährleistet, so dass eine Gruppenauslösung von Hand bequem möglich ist.

Diese Aufgabe ist bei einem Selbstfanghalsrahmen der eingangs genannten Art erfindungsgemäss dadurch gelöst, dass die Kniehebelarme ungleich lang sind und der kürzere Arm des Kniehebels über dessen angenähert faltbares Knie hinaus verlängert ist; dass an der Verlängerung des kürzeren Kniehebelarmes ein kreisbogenförmiges Steilkurvenstück so befestigt ist, dass der Kreiskurvenmittelpunkt mit dem Kniepunkt zusammenfällt; und dass das Zugseil bei geschlossenem Rahmen über das Kurvenstück gelegt und am unteren Kurvenstückende befestigt ist. Die Sicherung der Schliesslage des gestreckten Kniehebels gegen das Beugen seines Knies nach unten kann mittels eines gestellfesten Anschlages oder durch die Straffung eines nicht dehnbaren Zugseiles erfolgen. Dadurch wird vorteilhafterweise erreicht, dass der erfindungsgemässe Selbstfanghalsrahmen bei hinreichend sicherer Verriegelung seiner Öffnungshebel eine relativ leichtgängige Öffnung desselben bei einer Gruppenauslösung mehrerer gleicher Rahmen gestattet.

Bei einer bevorzugten Ausführungsform des erfindungsgemässen Selbstfanghalsrahmens sind die Verlängerung des kürzeren Kniehebelarmes und das bei geschlossenem Rahmen untere Ende des Kurvenstückes mittels eines Armes starr verbunden, der sich senkrecht zur Verlängerung erstreckt. Dieser Arm stellt einen Hebelarm beträchtlicher Länge dar, welcher die Betätigung des Kniehebels erleichtert.

Bei der bevorzugten Ausführungsform weist das Traggestell für den Drehpunkt eines Öffnungshebels eine waagrechte Reihe von im wesentlichen waagrechten Bohrungen zur wahlweisen Aufnahme eines Gelenkzapfens auf, und sind ungefähr symmetrisch zur Symmetrieebene angeordnete Bohrungen durch je einen Gelenkzapfen belegt, deren waagrechter Abstand die Halsweite des geschlossenen Rahmens bestimmt. Damit ist es auf einfache Weise möglich, den erfindungsgemässen Selbstfanghalsrahmen der Tiergrösse, nämlich der Halsbreite, individuell anzupassen, so dass ein Tier, das sich im Halsrahmen selbst gefangen hat, seinen breiteren Kopf nicht zwischen den im Schliesszustand überall denselben senkrechten Abstand voneinander aufweisenden Öffnungsund Schliesshebeln hindurch zurückziehen und sich dadurch ungewollt befreien kann.

Bei der bevorzugten Ausführungsform ist das Traggestell mit verstellbaren Schraubanschlägen für die oberen Arme der Öffnungshebel und für den Verbindungsarm versehen, damit im Schliesszustand des erfindungsgemässen Selbstfanghalsrahmens dessen Kniehebelknie und Kniehebelanlenkungspunkte eine Zugentlastung erfahren, beziehungsweise dass im Öffnungszustand dieselben Gelenke nicht überlastet werden, wenn das Tier vor der Rahmenschliessung seinen durch die Rahmenöffnung gesteckten Hals gegen einen der Öffnungshebel wirft.

Bei der bevorzugten Ausführungsform weist das Traggestell zwei bezüglich der Ebene der Öffnungshebel symmetrisch ausgebildete, gekröpfte Platten auf, deren untere, einander näherliegende Teile die Öffnungshebel an ihren Drehpunkten einschliessen, und deren obere, einander fernerstehende Teile den Kniehebel und das Seilkurvenstück zwischen sich einschliessen. Dadurch wird insbesondere bei rechtwinkliger Kröpfung eine kompakte, glatte äussere Gestalt des Gestells bei einfacher Lagerung der Öffnungshebel an deren Drehpunkten erreicht.

Bei der bevorzugten Ausführungsform, deren beide Schliesshebel an ihren unteren Enden an den oberen Enden eines U-förmigen Bügels angebracht sind, dessen Joch mittels des biegsamen Stranges mit dem Stallboden verbunden ist, sind die mit den Schliesshebeln gelenkig verbundenen oberen Enden des Bügels durch je ein im wesentlichen vertikales Verbindungsstück gebildet, das auf der Aussenseite jedes Bügelschenkels befestigt und in seiner Länge so bemessen ist, dass die unteren Enden der Schliesshebel in deren im wesentlichen vertikaler Schliessstellung annähernd fugenlos an die oberen Enden der Bügelschenkel anschliessen. Daran ist vorteilhaft, dass sich das Tier, wenn es seinen Hals zwischen den Schliesshebeln diesen entlang nach unten bewegt, nicht mit seinem Hals an den oberen Enden des U-förmigen Bügels verletzen kann, weil die vom Tier selbst vertikal gestellten Schliesshebel danach glatt in die Bügelschenkel übergehen, so dass der Tierhals ohne Gefahr im Bügel weiter abgesenkt werden kann.

Bei einer anderen Ausführungsform sind die beiden Schliesshebel an ihren unteren Enden mittels eines Drehzapfens, dessen Achse auf der Ebene der Öffnungshebel senkrecht steht, gelenkig miteinander verbunden und ist ausserdem der Drehzapfen mittels des biegsamen Stranges bei geöffnetem Rahmen straff mit dem Stallboden verbunden. Dadurch ist es wegen des Wegfalls des U-Bügels möglich, die Weite des geöffneten Rahmens zu vergrössern und das mit seinem Hals darin steckende Tier den Rahmen wahlweise durch Absenken seines Halses auf die gefesselte gemeinsame Anlenkungsstelle der beiden Schliesshebel oder vorzugsweise durch vorwärts gerichtetes Auslenken der mittleren Hebelgelenke mittels des Tierhalses schliessen zu lassen, wie das in der DE-A-27 22 730 angeregt wurde.

Bei dieser zweiten Ausführungsform ist der längere Arm des Kniehebels über dessen Knie hinaus verlängert und schlägt die Verlängerung an einer Stellschraube an, die wiederum in das Traggestell eingreift. Dadurch ist der aussenliegende Kopf der Stellschraube auch dann zugänglich, wenn das Seilkurvenstück seitlich aus dem Traggestell herausgeklappt ist.

Bei der zweiten Ausführungsform ist das kreisbogenförmige Seilkurvenstück mit zwei das Zugseil zwischen sich aufnehmenden seitlichen Flanschen versehen, deren Stirnflächen bezüglich des Kniepunktes exzentrisch verlaufen und mit einem am oberen Arm des am längeren Kniehebelarm angelenkten Öffnungshebels befestigten Klemmbacken zur Arretierung der Öffnungshebel in deren Schliessstellung zusammenwirkt. Dadurch wird verhindert, dass die Lagerstellen der Öffnungshebel am Traggestell allmählich ausschlagen, wenn das gefangene Tier seinen Hals seitlich hin und her wirft, der im allgemeinen nicht beidseitig an den Öffnungshebeln anliegt.

Der Klemmbacken der zweiten Ausführungsform, bei der ebenfalls mehrere Lagerstellen für einen Öffnungshebel am Traggestell vorgesehen sind, ist auswechselbar befestigt, so dass er in verschiedenen, den einzelnen Lagerstellen zugeordneten passenden Grössen verwendet werden kann.

Der erfindungsgemässe Selbstfanghalsrahmen ist zur bekannten Aufhängung an einem Stallgerüst aus mehreren vertikalen Standrohren und aus einem deren obere Enden verbindenden waagrechten Oberrohr bestimmt und geeignet. Zweckmässig ist das Zugseil des Rahmens deshalb an seinem kurvenstückfernen Ende an einer waagrechten Bedienungsstange für mehrere Rahmen festgelegt, welche in ihrer geraden Längsrichtung hin und her verschiebbar längs des Oberrohres an diesem gelagert und mittels eines Handhebels bewegbar ist. Dadurch kann eine einfache Gruppenauslösung mehrerer Rahmen erfolgen.

Dazu ist speziell vorgesehen, dass an der beweglichen Bedienungsstange und am festliegenden Oberrohr eine Lasche bzw. ein zweiarmiger Schwenkhebel als Handhebel endseitig angelenkt sind, wobei die Lasche ausserdem am Schwenkhebel zwischen dessen beiden Enden angelenkt ist; und dass der Handhebel über den Punkt der Anlenkung der Lasche am Hebel als Totpunkt hinaus beim Schwenken des Hebels im Sinne einer Rahmenöffnung bewegbar ist, wobei der Schwenkhebel auf einen Anschlag am Oberrohr trifft. Eine durch Anschläge begrenzte Schwenkbewegung ist besonders bequem und schnell ausführbar, so dass die Gruppenauflösung wenig Kraft bzw. Zeit erfordert.

Ist das Traggestell des Rahmens wie bekannt mittels zweier kurzer Kettenstücke am Oberrohr des Stallgerüstes aufhängbar, so kann an der Aufhängungsstelle am Oberrohr eine Führung für die Bedienungsstange vorgesehen sein, z. B. eine Öse, die auf oder unter einer Platte sitzt, die am Oberrohr durch zwei Schraubverbindungen mittels einer Bügelschraube mit Muttern befestigt ist.

Falls zur Festlegung des Zugseils an der Bedienungsstange eine Öse bzw. ein Haken vorgesehen sind, können durch Trennen von Öse und Haken einzelne ausgewählte Rahmen einfach von der Gruppenauslösung aller Rahmen ausgenommen werden.

Bei der zweiten Ausführungsform ist der Haken oder die Öse zur Festlegung des Zugseiles längs der Bedienungsstange verschiebbar an dieser gelagert, so dass die Befestigungsstelle beliebig gewählt werden kann.

Bei der zweiten Ausführungsform ist als Hebel zum Bewegen der Bedienungsstange eine Handkurbel vorgesehen, welche die Welle einer am Oberrohr festgelegten Seilwinde dreht, deren Seiltrommel von zwei gegenläufig aufgewickelten Seilen umschlungen ist, deren straffe freie Enden in einander entgegengesetzte Richtungen parallel zur Bedienungsstange weisend an dieser festgelegt sind. Mittels dieser handbetätigten Seilwinde kann eine Einzel- oder insbesondere Gruppenauslösung des in Ein- bzw. Mehrzahl vorhandenen erfindungsgemässen Rahmens durch geringeren menschlichen Kraftaufwand erfolgen als bei der ersten Ausführungsform mit manuell umlegbarem Schwenkhebel.

Die Seilwinde und/oder die freien Enden ihrer beiden Seile sind bei der zweiten Ausführungsform längs der Bedienungsstange verschiebbar an dieser festgelegt, so dass auch diese drei Befestigungsstellen der Seilwinde beliebig gewählt werden können. Die Seilwinde weist bei der zweiten Ausführungsform ein Klinkengesperre auf, dessen greifbare Druckklinke mit einem auf der Trommelwelle der Winde sitzenden, aussenverzahnten Sperr-Rad, das ein Flansch der Trommel sein kann, eine Lockerung des gespannten Zugseiles sperrend, zusammenwirkt. Dieses Gesperre verhindert bei Unterbrechung der Rahmenöffnung eine selbsttätige Rahmenschliessung unter dem Einfluss des Gewichts der Hebelpaare und des angehängten Fessel-Stranges sowie des angehobenen, aber noch nicht bis zum Anschlag beiseite geschwenkten Seilkurvenstückes. Zum Lockern des Zugseiles kann die Sperrklinke von Hand ausser Eingriff in das Sperr-Rad gebracht werden.

Zur Verriegelung der Seiltrommel im Schliess- und Öffnungszustand des Rahmens ausgebildet ist das Klinkengesperre der zweiten Ausführungsform, damit der geschlossene Rahmen nicht ohne bewusste Entsperrung versehentlich durch Drehen der verwechselten Handkurbel geöffnet wird.

Im folgenden ist die Erfindung anhand der durch die Zeichnung beispielhaft dargestellten bevorzugten Ausführungsform des erfindungsgemässen Selbstfanghalsrahmens und einer Variante im einzelnen erläutert. Es zeigt:

Fig. 1 eine frontale Ansicht der Ausführungsform im Öffnungszustand (rechts) und im Schliesszustand (links);

Fig. 2 eine Seitenansicht des Schlosses der Ausführungsform im Schliesszustand;

Fig. 3 die gleiche Ansicht im Öffnungszustand;

Fig. 4 einen Querschnitt nach der Linie IV-IV in Fig. 2 durch das Schloss der Ausführungsform im Schliesszustand;

Fig. 5 eine Draufsicht auf das Schloss der Ausführungsform im Schliesszustand;

Fig. 6 und 7 der linken bzw. rechten Hälfte von Fig. 1 entsprechende Ansichten der Variante der Ausführungsform;

Fig. 8 eine Seitenansicht dieser Variante im Öffnungszustand in Richtung des Pfeiles VIII in Fig. 7; und

Fig. 9 eine perspektivische Ansicht des Schlosses der Variante in Verbindung mit einer Seilwinde derselben.

Im Ausführungsbeispiel besteht der erfindungsgemässe Selbstfanghalsrahmen hauptsächlich aus einem aufgehängten Traggestell 10, aus zwei gleichen, geraden, rohrförmigen Öffnungshebeln 12, aus zwei den Öffnungshebeln gleichenden, kürzeren Schliesshebeln 14, aus einem in U-Form gebogenen Rohrbügel 16, der mittels einer Unterkette 18 lose am Stallboden 20 verankert ist, aus zwei parallelen stabförmigen Verbindungsstücken 22 zwischen dem Bügel 16 und den zwei Schliesshebeln 14 und aus einem im Traggestell 10 angeordneten Schloss 24 zum reversiblen Verriegeln der zwei Öffnungshebel 12 in deren im wesentlichen vertikaler Schliessstellung.

Die beiden Öffnungshebel 12 bestehen je aus einem kürzeren oberen Arm 12.1 sowie aus einem längeren unteren Arm 12.2, von denen die oberen Arme ganz im Traggestell 10 angeordnet sind und die unteren Arme grösstenteils aus diesem Gestell unten herausragen. Die unteren Enden der Öffnungshebel 12 und die oberen Enden der Schliesshebel 14 sind derart gelenkig miteinander verbunden, dass im Schliesszustand des Selbstfanghalsrahmens, wobei auf jeder Schmalseite des Rahmens der Öffnungshebel 12 und der angelenkte Schliesshebel 14 geradlinig übereinander angeordnet sind, die Gelenkstelle 26 nach vorn bewegt werden kann, so dass der Öffnungshebel und der angelenkte Schliesshebel einen stumpfen Innenwinkel bilden, und dass beim Übergang vom Schliesszustand zum Öffnungszustand des Rahmens die zwei Hebelpaare 12-14 zwei koplanare, an den Gelenkstellen 26 ungefähr rechtwinklige Dreiecke bilden, die zusammen ungefähr ein Viereck mit maximaler Entfernung der beiden in gleicher Höhe liegenden Gelenkstellen 26 voneinander formen. Ungefähr am Übergang der zwei oberen Drittel jedes Schliesshebels 14 zu dessen unterem Drittel ist dieser Hebel seitlich am oberen Ende eines der zwei Verbindungsstücke 22 angelenkt, das seinerseits auf der Aussenseite eines der zwei geraden parallelen Bügelschenkel 16.1 beziehungsweise 16.2 diesen derart überlappend befestigt ist, dass im Schliesszustand des Rahmens das untere Drittel jedes Schliesshebels 14 an der Innenseite des ihm zugeordneten Bügelschenkels anliegt und dabei dem Bügelschenkel ohne wesentlichen Abstand davon geradlinig gegenübersteht. Das halbkreisförmige Bügeljoch 16.3 lagert an seinem tiefsten Punkt die Unterkette 18, deren Länge so bemessen ist, dass sie im Öffnungszustand des Rahmens gestrafft ist. Die gestraffte Unterkette 18 markiert die Lage einer vertikalen Symmetrieebene 28, bezüglich der die Öffnungshebel 12 und die Schliesshebel 14 sowohl im Schliesswie im Öffnungszustand des Rahmens sowie die Schenkel des Bügels 16 und die Verbindungsstücke 22, welche Rahmenteile alle gerade sind, symmetrisch angeordnet sind.

Das Traggestell 10 weist zwei fest miteinander verbundene Hälften 10.1 beziehungsweise 10.2 auf, die bezüglich einer bei richtiger und freier Aufhängung des Gestelles vertikal angeordneten Rahmenebene 30 symmetrisch angeordnet und ausgebildet sind, in welcher die Hebel 12 und 14 sowie der Bügel 16 und die Verbindungsstücke 22 liegen, falls der Rahmen nicht an den Gelenkstellen 26 nach vorn ausgeknickt ist. Jede Gestellhälfte besteht aus einer rechtwinklig abgekröpften Platte, so dass die unteren Plattenteile 10.1.1 beziehungsweise 10.2.1 einander beträchtlich näher stehen als die oberen Plattenteile 10.1.2 beziehungsweise 10.2.2. Jedes untere Plattenteil 10.1.1 oder 10.2.1 weist auf einer Seite der Symmetrieebene 28 eine Bohrung 32 und auf der anderen Seite dieser Ebene eine waagrechte Reihe von dicht beieinanderliegenden Bohrungen 34 auf, durch die paarweise und je nach dem gewünschten senkrechten Abstand der beiden Öffnungshebel 12 voneinander ein sich parallel zur Symmetrieebene 28 waagrecht erstreckender, axial gesicherter Gelenkbolzen 36 gesteckt ist, an dem je einer der Öffnungshebel 12 hängt und dadurch schwenkbar gelagert ist. An den in den Raum zwischen den Traggestellhälften 10.1 beziehungsweise 10.2 hineinragenden oberen Hebelarmen 12.1 ist je ein diese zwei Arme verbindender Kniehebel 38 mit den freien Enden seiner zwei Arme 38.1 und 38.2 angelenkt, wobei der den zugeordneten oberen Hebelarm 12.1 aufnehmende längere Hebelarm 38.2 an seinem freien Ende ebenfalls eine gerade Reihe von Bohrungen 40 aufweist, die den Bohrungen 34 entsprechen und mit diesen paarweise zur Bestimmung der Rahmenweite verwendet werden, indem ein Gelenkbolzen 42 den oberen Arm 12.1 des Öffnungshebels mit der passenden Stelle des längeren Kniehebelarmes 38.2 verbindet. Eine entsprechende Verbindung ist zwischen dem kürzeren Kniehebelarm 38.1 und dem oberen Arm 12.1 des anderen Öffnungshebels vorgesehen; diese Verbindung ist aber nicht verstellbar. Das mit einem Gelenkbolzen 46 versehene Knie 44 des Kniehebels 38 ist bei vertikal gestellten Öffnungshebeln 12, die in dieser Stellung mit ihren oberen Armen 12.1 an je einer seitlich am Traggestell 10 angebrachten Stellschraube 48 anschlagen, gestreckt.

An einer kurzen Verlängerung 50 des kürzeren Kniehebelarmes 38.1 über den Kniegelenkbolzen 46 hinaus ist im rechten Winkel zu diesem Arm ein Verbindungsarm 52 angesetzt, an dessen freies Ende ein kreisbogenförmiges Seilkurvenstück 54 angeformt ist, dessen Zylinderachse mit der Achse des Kniegelenkbolzens 46 zusammenfällt. Dabei ist die Anordnung so getroffen, dass der Verbindungsarm 52 bei geschlossenem Rahmen ungefähr vertikal nach unten zeigt und das freie Ende des Seilkurvenstückes 54 ungefähr vertikal nach oben zeigt, wenn das Knie 44 gerade gestreckt ist. Auf der Aussenseite des freien Endes des Verbindungsarmes 52 ist ein Ende eines nicht dehnbaren Zugseiles 58 befestigt, das um die abgerundete Anformungsstelle zwischen Verbindungsarm 52 und Kurvenstück 54 aussen herumgelegt ist und die konvexe Seite des Kurvenstückes umschlingt, und zwar vollständig bei geschlossenem Rahmen. Damit das Knie 44 beim Schliessen des Rahmens nicht nach unten durchgedrückt werden kann, wobei sich der Rahmen wieder öffnen würde, steht das Zugseil 58 unter einer entsprechend grossen Zugspannung; es ist dazu an seinem kniefernen Ende an einem Haken 60 eingehängt, der an einer waagrechten Bedienungsstange 62 für mehrere Selbstfanghalsrahmen befestigt ist. Die Stange 62 ist in ihrer geraden Längsrichtung hin und her verschiebbar längs eines waagrechten Oberrohres 64 gelagert, das sich längs mehrerer Tierstände, die mit je einem Rahmen versehen sind, erstreckt und an den oberen Enden mehrerer vertikaler Standrohre 66 fest gelagert ist. Am Oberrohr 64 ist mittels zweier kurzer Kettenstücke 68 das Traggestell 10 jedes Rahmens so aufgehängt, dass die beiden Kettenstücke in der Symmetrieebene 28 des Rahmens auf verschiedenen Seiten der Rahmenebene 30 angeordnet sind. An einer geeigneten Stelle des aus den Rohren 64 und 66 bestehenden Stallgerüstes sind an der beweglichen Bedienungsstange 62 und am festliegenden Oberrohr 64 eine Lasche 70 beziehungsweise ein zweiarmiger Schwenkhebel 72 endseitig angelenkt. Die Lasche 70 ist ausserdem am Schwenkhebel 72 zwischen dessen beiden Enden angelenkt, so dass eine Schwenkung des Hebels 72 über nahezu 180° zwischen zwei Lagen, in denen sich der Hebel ungefähr parallel zum Oberrohr 64 erstreckt, zu einer bestimmten Verschiebung der Bedienungsstange 62 führt, die dabei am Seil 58 zieht oder dieses lockert. Beim Straffen des Zugseiles 58 löst sich dieses zunehmend vom Umfang des Seilkurvenstückes 54, das den kürzeren Kniehebelarm 38.1 mittels des Verbindungsarmes 52 um den Gelenkbolzen 42 schwenkt, der den kürzeren Kniehebelarm 38.1 und einen der oberen Arme 12.1 der Öffnungshebel verbindet, wobei das Knie 44 nach oben gebeugt und darüber hinaus überbeugt wird, bis es nahezu gefaltet ist. In diesem Kniezustand, der dadurch erreicht wird, dass der Gelenkpunkt der Verbindung von kürzerem Kniehebelarm 38.1 und angelenktem Hebelarm 12.1 durch die Verbindungsgerade von Kniepunkt und Gelenkpunkt der Verbindung von Öffnungshebel 12 und Traggestell 10 wandert, muss, im Ausführungsbeispiel als Anschlag für die dem Seilkurvenstück 54 zugewandte Seite des Verbindungsarmes 52, eine Stellschraube 74 am Traggestell 10 angeordnet sein, damit ein Überfalten den Knies 44 vermieden wird und es deshalb möglich ist, durch seitliches Hinausschwenken des am kürzeren Kniehebelarm 38.1 angelenkten oberen Hebelarmes 12.1 mittels des Verbindungsarmes 52 das Seilkurvenstück 54 vom Tier, das den vorher geöffneten Rahmen selbst schliesst, zurückdrehen zu lassen, wobei das lose Zugseil 58 sich allmählich an den Umfang des Kurvenstückes anlegt und schliesslich gespannt wird. Voraussetzung hierfür ist, dass der Schwenkhebel 72 nach der Gruppenauslösung aller an die Bedienungsstange 62 angeseilten, einander gleichenden Selbstfanghalsrahmen sofort zurückgeschwenkt wird, damit ein Selbstfang des Tieres im Rahmen möglich ist.

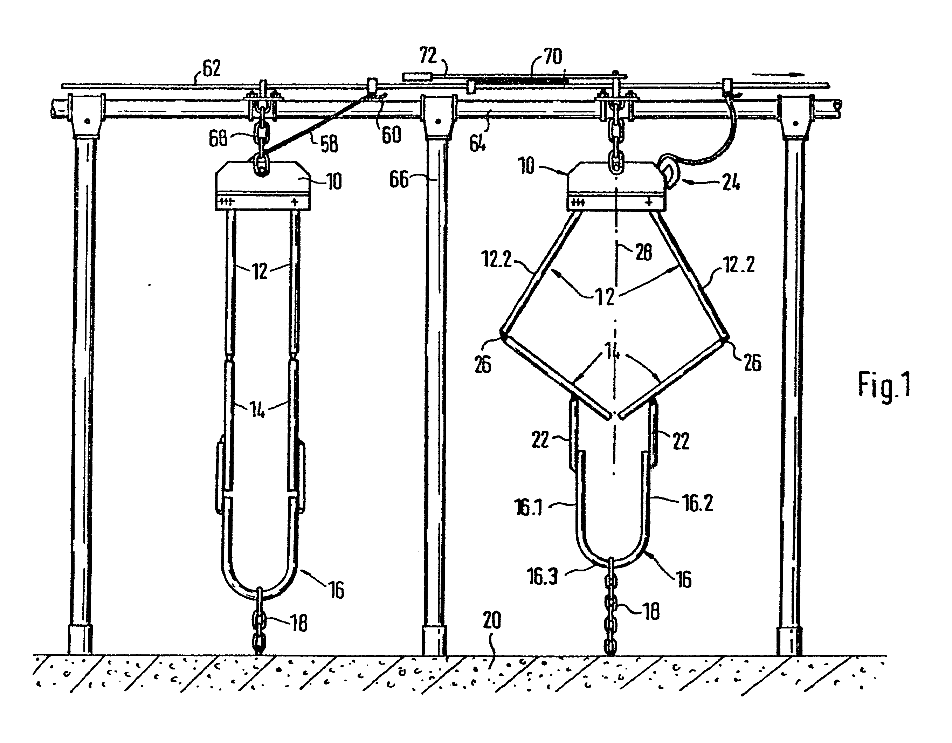

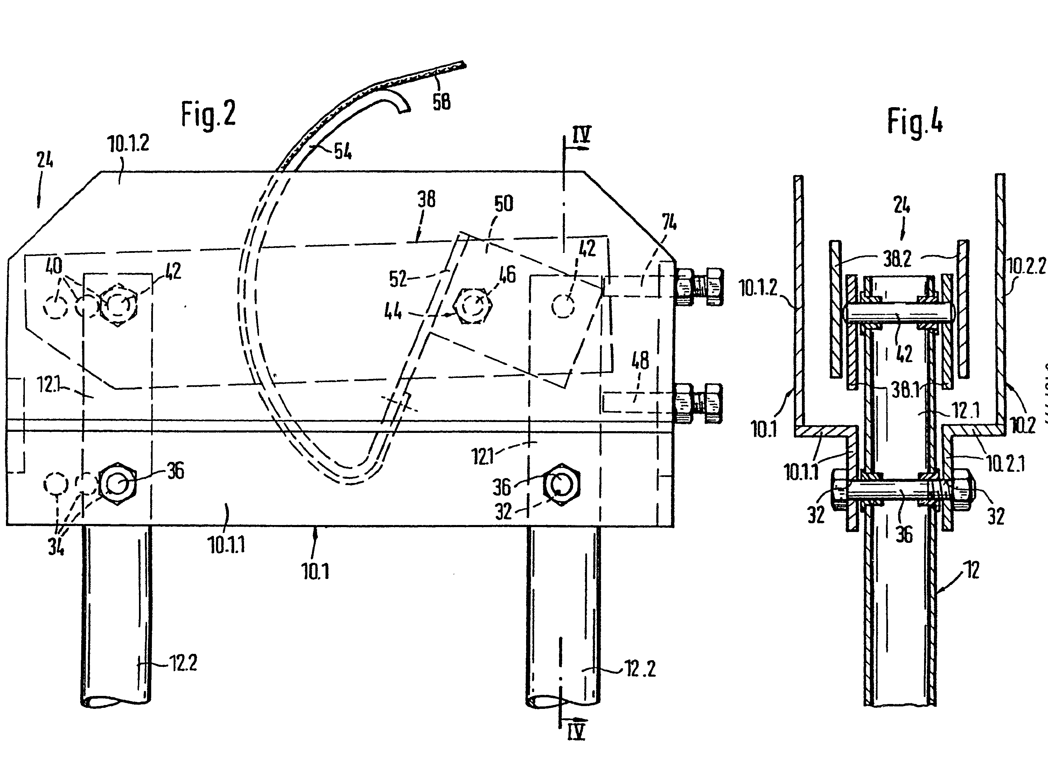

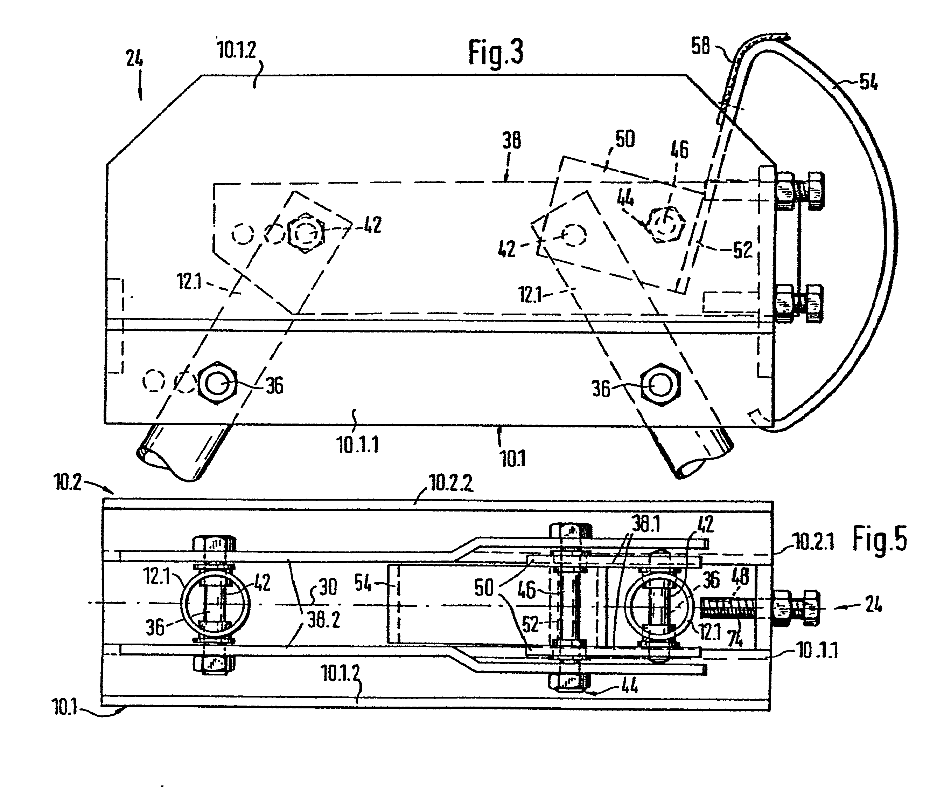

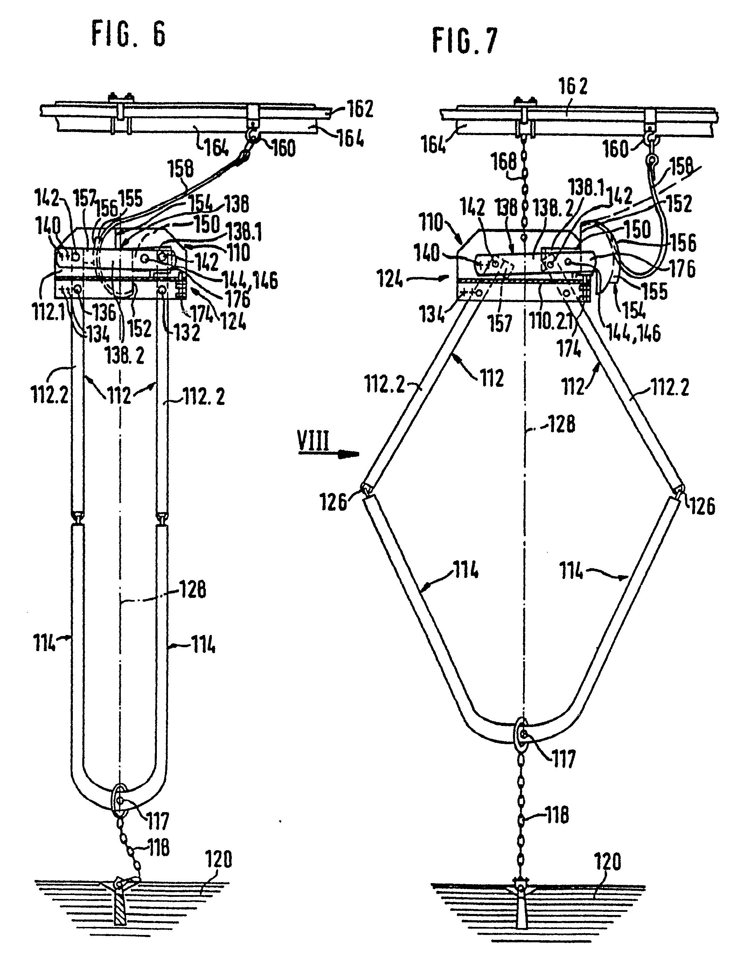

In den die Variante der Ausführungsform gemäss Fig. 1 bis 5 wiedergebenden Fig. 6 bis 9 sind den Teilen der Ausführungsform gleichende oder entsprechende Teile mit um 100 höheren Bezugszahlen versehen. Insoweit gilt die vorstehende Beschreibung der Ausführungsform wörtlich bzw. sinngemäss auch für deren Variante, die im folgenden nur hinsichtlich ihrer Unterschiede zur Ausführungsform beschrieben wird.

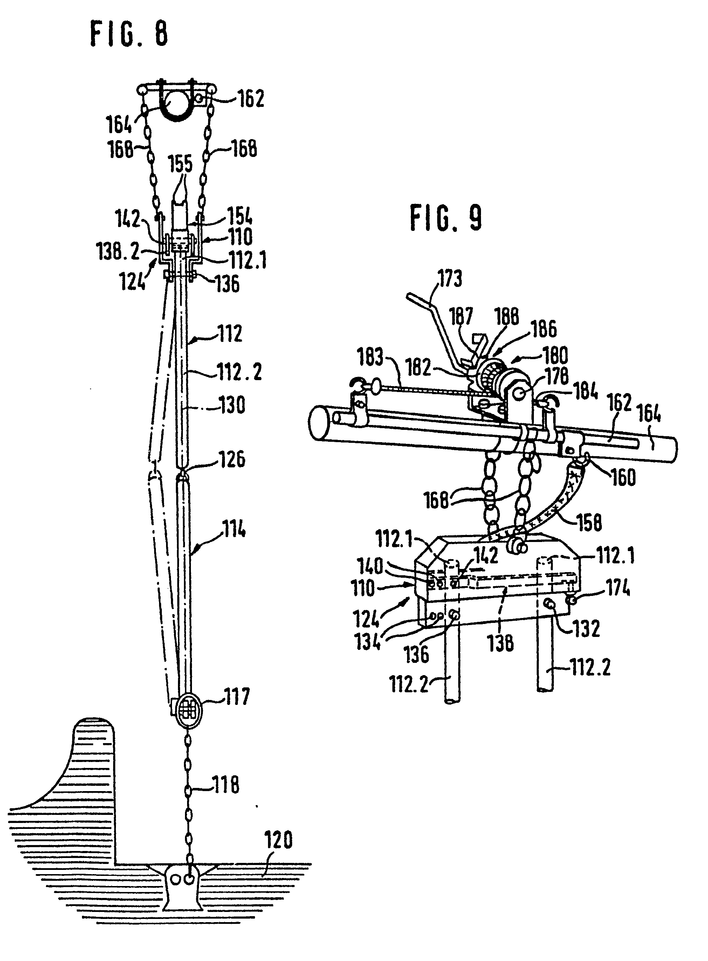

Hier sind die zwei Schliesshebel 14 und der U-förmige Rohrbügel 16 unter Wegfall der Verbindungsstücke 22 und Halbierung des Bügels zu zwei ein langgestrecktes U bildenden L-förmigen Schliesshebeln 114 umgeformt, die an ihren unteren, mit der Unterkette 118 versehenen Enden mittels eines Drehzapfens 117 gelenkig miteinander verbunden sind, wobei der Drehzapfen 117 senkrecht zu der von den beiden Schliesshebeln 114 bestimmten Ebene steht und die Länge der Unterkette 118 so bemessen ist, dass sie straff gespannt ist, wenn der vertikal hängende Halsrahmen geöffnet ist, wie aus den Fig. 7 und 8 ersichtlich ist. Infolgedessen kann eine Auslenkung der zwei Gelenkstellen 126 zwischen den Öffnungs- und Schliesshebeln 112 bzw. 114 nach vorn oder hinten, beispielsweise in die in Fig. 8 gestrichelt eingezeichnete Hebellage, zu einem Zusammenklappen der beiden Schliesshebel 114 in deren im wesentlichen vertikale Schliessstellung führen, weil die Unterkette 118 den Drehzapfen 117 dabei festhält. Das sich selbst fangende Tier kann also mit seinem Hals entweder nach unten oder nach vorn gehen, um den Halsrahmen zu schliessen.

An dem am längeren Arm 138.2 des Kniehebels 138 angelenkten oberen Ende des oberen Armes 112.1 des in den Fig. 6 und 7 linken Öffnungshebels 112 ist auf der dem gegenüberliegenden Hebelarm 112.1 zugewandten Seite ein klotzförmiger Klemmbacken 157 auswechselbar befestigt, der mit den (nicht kreis-)zylindrischen Stirnflächen 156 zweier paralleler seitlicher Flansche 155 am Seilkurvenstück 154 in der Weise zusammenwirkt, dass das Seilkurvenstück bei seiner Bewegung aus seiner Öffnungslage gemäss Fig. 7 ausserhalb des Traggestells 110 in seine Schliesslage gemäss Fig. 6 innerhalb des Traggestells mit seinen Stirnflächen 156 dem Klemmbacken 157 zunehmend näher kommt, bis es dort aufgelaufen ist und die bei geschlossenem Halsrahmen erreichte Strecklage des Kniehebels 138 sichert. Falls der in Fig. 6 linke Öffnungshebel 112 mittels eines anderen Paares von Bohrungen 134 bzw. 140 angelenkt werden soll, muss auch der Klemmbacken 157 zwecks Anpassung an die geänderte Halsweite ausgewechselt werden. Wesentlich ist, dass die Stirnflächen 156 des Seilkurvenstückes 154 in bezug auf das Knie 144 des Kniehebels 138 nicht konzentrisch, sondern exzentrisch verlaufen, dergestalt, dass, da beim Hineinschwenken des Seilkurvenstückes 154 in das Traggestell 110 eine Annäherung seiner Stirnflächen 156 an den sich in seine Sperrstellung gemäss Fig. 6 bewegenden Klemmbacken 157 stattfinden soll, der radiale Abstand der Stirnflächen 156 vom Knie 144 gegen die Schwenkrichtung des Seilkurvenstückes 154 zunimmt, falls das Hineinschwenken betrachtet wird.

Der längere Arm 138.2 des Kniehebels 138 ist über das Knie 144 hinaus ungefähr um die Länge des kürzeren Kniehebelarmes 138.1 verlängert; diese Verlängerung 176 bildet mit ihrer Unterseite den Anschlag für eine Stellschraube 174, die von unten her in das Traggestell 110 unter Sicherung eingeschraubt ist und die Öffnungslage des Seilkurvenstückes 154 bestimmt, wie aus Fig. 7 ersichtlich ist. Die Stellschraube 174 ist in den waagrechten Schenkel des unteren Plattenteiles 110.2.1 der hinteren Gestellhälfte 110.2 eingeschraubt, so dass ihr unten liegender Kopf neben einem der Öffnungshebel 112 angeordnet und auch in dessen Öffnungsstellung erreichbar ist, in welcher sie justiert werden muss. Für die Stellschraube 174 entfällt die Stellschraube 74, während die als Anschlag für einen Öffnungshebel 112 dienende Stellschraube 48 zwar nicht gezeichnet, jedoch an gleicher Stelle auch bei der Variante der Ausführungsform vorhanden ist.

Statt des Schwenkhebels 72 und der ihm zugeordneten Teile der Ausführungsform ist bei deren Variante zur Hin- und Herverschiebung der Bedienungsstange 162 zwecks Halsrahmenöffnung bzw. Einstellung der Selbstfangbereitschaft des Halsrahmens eine Seilwinde 180 mit Klinkengesperre 186 vorgesehen. Die Welle 178 der Winde 180 ist an dem Oberrohr 164 drehbar gelagert und mit einer Handkurbel 173 versehen. Eine drehfest auf der Welle 178 sitzende Seiltrommel 182 der Winde 180 ist mit zwei gegenläufigen Seilen 183 und 184 belegt, deren nicht an der Trommel befestigte Enden in einander entgegengesetzten Richtungen von der Trommel weglaufen und beispielsweise je mittels Haken und Öse an der Stange 162 befestigt sind, wie das aus Fig. 9 ersichtlich ist. Zum Klinkengesperre 186 gehört ein Sperr-Rad 188, das einen der beiden Flansche der Seiltrommel 182 bildet und mit einer Umfangsverzahnung versehen ist, mit der eine schwenkbar an der Winde 180 gelagerte Druckklinke 187 in beiden Drehrichtungen der Seiltrommel 182 zusammenwirkt. Deshalb muss die Druckklinke 187 von Hand vom Sperr-Rad 188 abgehoben werden, wenn die Seiltrommel 182 mittels der Handkurbel 173 in der einen oder anderen Richtung gedreht werden soll.

## Patentansprüche

1. Selbstfanghalsrahmen für grössere Tiere, insbesondere Rinder, mit einem in einem Tierstand aufhängbaren Traggestell (10); mit zwei in einer im wesentlichen vertikalen Ebene liegenden zweiarmigen Öffnungshebeln (12), die symmetrisch zu einer vertikalen Ebene angeordnet sind, welche auf der Ebene der Öffnungshebel (12) senkrecht steht, und welche an ihren oberen Enden (12.1) um zur Symmetrieebene parallele, im wesentlichen waagrechte Achsen (36) drehbar am Traggestell (10) gelagert sind; mit zwei in der Ebene der Öffnungshebel (12) symmetrisch zur Symmetrieebene angeordneten zweiarmigen Schliesshebeln (14), die mit ihren oberen Enden mit den unteren Enden (12.2) der Öffnungshebel (12) gelenkig verbunden und an ihren unteren Enden angelenkt sind, wobei die Anlenkungsstelle(n) (26) mittels eines biegsamen Stranges (18) mit dem Stallboden (20) verbunden ist/sind; mit einem am Traggestell (10) angeordneten Schloss (24) zum reversiblen Verriegeln der Öffnungshebel (12) in deren im wesentlichen vertikaler Schliessstellung und mit einem Seilzug (58) zum Entriegeln des Schlosses (24), welcher am Knie (44) eines Kniehebels (38) angreift, dessen Arme (38.1, 38.2) an den oberen Enden (12.1) der Öffnungshebel (12) oberhalb der Drehpunkte (36) dieser Öffnungshebel (12) angelenkt und im Schliesszustand gestreckt sind, wobei nach DE-Patent 33 22 217 die Kniehebelarme (38.1, 38.2) ungleich lang sind und der kürzere Arm (38.1) des Kniehebels (38) über dessen angenähert faltbares Knie (44) hinaus verlängert (50) ist; an der Verlängerung (50) des kürzeren Kniehebelarmes (38.1) ein kreisbogenförmiges Seilkurvenstück (54) so befestigt ist, dass der Kreiskurvenmittelpunkt mit dem Kniepunkt (44) zusammenfällt; und das Zugseil (58) bei geschlossenem Rahmen über das Kurvenstück (54) gelegt und am unteren Kurvenstückende befestigt ist, dadurch gekennzeichnet, dass das Traggestell (10) für den Drehpunkt eines Öffnungshebels (12) eine waagrechte Reihe von im wesentlichen waagrechten Bohrungen (34) zur wahlweisen Aufnahme eines Gelenkzapfens (36) aufweist, und dass ungefähr symmetrisch zur Symmetrieebene angeordnete Bohrungen (32, 34) durch je einen Gelenkzapfen (36) belegt sind, deren waagrechter Abstand die Halsweite des geschlossenen Rahmens bestimmt.

2. Selbstfanghalsrahmen für grössere Tiere, insbesondere Rinder, mit einem in einem Tierstand aufhängbaren Traggestell (10); mit zwei in einer im wesentlichen vertikalen Ebene liegenden zweiarmigen Öffnungshebeln (12), die symmetrisch zu einer vertikalen Ebene angeordnet sind, welche auf der Ebene der Öffnungshebel (12) senkrecht steht, und welche an ihren oberen Enden (12.1) um zur Symmetrieebene parallele, im wesentlichen waagrechte Achsen (36) drehbar am Traggestell (10) gelagert sind; mit zwei in der Ebene der Öffnungshebel (12) symmetrisch zur Symmetrieebene angeordneten zweiarmigen Schliesshebeln (14), die mit ihren oberen Enden mit den unteren Enden (12.2) der Öffnungshebel (12) gelenkig verbunden und an ihren unteren Enden angelenkt sind, wobei die Anlenkungsstelle(n) (26) mittels eines biegsamen Stranges (18) mit dem Stallboden (20) verbunden ist/sind; mit einem am Traggestell (10) angeordneten Schloss (24) zum reversiblen Verriegeln der Öffnungshebel (12) in deren im wesentlichen vertikaler Schliessstellung und mit einem Seilzug (58) zum Entriegeln des Schlosses (24), welcher am Knie (44) eines Kniehebels (38) angreift, dessen Arme (38.1, 38.2) an den oberen Enden (12.1) der Öffnungshebel (12) oberhalb der Drehpunkte (36) dieser Öffnungshebel (12) angelenkt und im Schliesszustand gestreckt sind, wobei nach DE-Patent 33 22 217 die Kniehebelarme (38.1, 38.2) ungleich lang sind und der kürzere Arm (38.1) des Kniehebels (38) über dessen angenähert faltbares Knie (44) hinaus verlängert (50) ist; an der Verlängerung (50) des kürzeren Kniehebelarmes (38.1) ein kreisbogenförmiges Seilkurvenstück (54) so befestigt ist, dass der Kreiskurvenmittelpunkt mit dem Kniepunkt (44) zusammenfällt; und das Zugseil (58) bei geschlossenem Rahmen über das Kurvenstück (54) gelegt und am unteren Kurvenstück befestigt ist, und wobei beide Schliesshebel (14) an ihren unteren Enden an den oberen Enden eines U-förmigen Bügels (16) angelenkt sind, dessen Joch (16.3) mittels des biegsamen Stranges (18) mit dem Stallboden (20) verbunden ist, dadurch gekennzeichnet, dass die mit den Schliesshebeln (14) gelenkig verbundenen oberen Enden des Bügels (16) durch je ein im wesentlichen vertikales Verbindungsstück (22) gebildet sind, das auf der Aussenseite jedes Bügelschenkels (16.1, 16.2) befestigt und in seiner Länge so bemessen ist, dass die unteren Enden der Schliesshebel (14) in deren im wesentlichen vertikaler Schliessstellung annähernd fugenlos an die oberen Enden der Bügelschenkel (16.1, 16.2) anschliessen.

3. Selbstfanghalsrahmen für grössere Tiere, insbesondere Rinder, mit einem in einem Tierstand aufhängbaren Traggestell (10); mit zwei in einer im wesentlichen vertikalen Ebene liegenden zweiarmigen Öffnungshebeln (12), die symmetrisch zu einer vertikalen Ebene angeordnet sind, welche auf der Ebene der Öffnungshebel (12) senkrecht steht, und welche an ihren oberen Enden (12.1) um zur Symmetrieebene parallele, im wesentlichen waagrechte Achsen (36) drehbar am Traggestell (10) gelagert sind; mit zwei in der Ebene der Öffnungshebel (12) symmetrisch zur Symmetrieebene angeordneten zweiarmigen Schliesshebeln (14), die mit ihren oberen Enden mit den unteren Enden (12.2) der Öffnungshebel (12) gelenkig verbunden und an ihren unteren Enden angelenkt sind, wobei die Anlenkungsstelle(n) (26) mittels eines biegsamen Stranges (18) mit dem Stallboden (20) verbunden ist/sind; mit einem am Traggestell (10) angeordneten Schloss (24) zum reversiblen Verriegeln der Öffnungshebel (12) in deren im wesentlichen vertikaler Schliessstellung und mit einem Seilzug (58) zum Entriegeln des Schlosses (24), welcher am Knie (44) eines Kniehebels (38) angreift, dessen Arme (38.1, 38.2) an den oberen Enden (12.1) der Öffnungshebel (12) oberhalb der Drehpunkte (36) dieser Öffnungshebel (12) angelenkt und im Schliesszustand gestreckt sind, wobei nach DE-Patent 33 22 217 die Kniehebelarme (38.1, 38.2) ungleich lang sind und der kürzere Arm (38.1) des Kniehebels (38) über dessen angenähert faltbares Knie (44) hinaus verlängert (50) ist; an der Verlängerung (50) des kürzeren Kniehebelarmes (38.1) ein kreisbogenförmiges Seilkurvenstück (54) so befestigt ist, dass der Kreiskurvenmittelpunkt mit dem Kniepunkt (44) zusammenfällt; und das Zugseil (58) bei geschlossenem Rahmen über das Kurvenstück (54) gelegt und am unteren Kurvenstückende befestigt ist, dadurch gekennzeichnet, dass die beiden Schliesshebel (114) an ihren unteren Enden mittels eines Drehzapfens (117), dessen Achse auf der Ebene der Öffnungshebel (112) senkrecht steht, gelenkig miteinander verbunden sind; und dass der Drehzapfen (117) mittels des biegsamen Stranges (118) bei geöffnetem Rahmen straff mit dem Stallboden (120) verbunden ist.

4. Selbstfanghalsrahmen nach einem Anspruch 2 oder 3, dadurch gekennzeichnet, dass der längere Arm (138.2) des Kniehebels (138) über dessen Knie (144) hinaus verlängert (176) ist und dass die Verlängerung (176) an einer Stellschraube (174) anschlägt.

5. Selbstfanghalsrahmen für grössere Tiere, insbesondere Rinder, mit einem in einem Tierstand aufhängbaren Traggestell (10); mit zwei in einer im wesentlichen vertikalen Ebene liegenden zweiarmigen Öffnungshebeln (12), die symmetrisch zu einer vertikalen Ebene angeordnet sind, welche auf der Ebene der Öffnungshebel (12) senkrecht steht, und welche an ihren oberen Enden (12.1) um zur Symmetrieebene parallele, im wesentlichen waagrechte Achsen (36) drehbar am Traggestell (10) gelagert sind; mit zwei in der Ebene der Öffnungshebel (12) symmetrisch zur Symmetrieebene angeordneten zweiarmigen Schliesshebeln (14), die mit ihren oberen Enden mit den unteren Enden (12.2) der Öffnungshebel (12) gelenkig verbunden und an ihren unteren Enden angelenkt sind, wobei die Anlenkungsstelle(n) (26) mittels eines biegsamen Stranges (18) mit dem Stallboden (20) verbunden ist/sind; mit einem am Traggestell (10) angeordneten Schloss (24) zum reversiblen Verriegeln der Öffnungshebel (12) in deren im wesentlichen vertikaler Schliessstellung und mit einem Seilzug (58) zum Entriegeln des Schlosses (24), welcher am Knie (44) eines Kniehebels (38) angreift, dessen Arme (38.1, 38.2) an den oberen Enden (12.1) der Öffnungshebel (12) oberhalb der Drehpunkte (36) dieser Öffnungshebel (12) angelenkt und im Schliesszustand gestreckt sind, wobei nach DE-Patent 33 22 217 die Kniehebelarme (38.1, 38.2) ungleich lang sind und der kürzere Arm (38.1) des Kniehebels (38) über dessen angenähert faltbares Knie (44) hinaus verlängert (50) ist; an der Verlängerung (50) des kürzeren Kniehebelarmes (38.1) ein kreisbogenförmiges Seilkurvenstück (54) so befestigt ist, dass der Kreiskurvenmittelpunkt mit dem Kniepunkt (44) zusammenfällt; und das Zugseil (58) bei geschlossenem Rahmen über das Kurvenstück (54) gelegt und am unteren Kurvenstückende befestigt ist, dadurch gekennzeichnet, dass das kreisbogenförmige Seilkurvenstück (154) mit zwei das Zugseil (158) zwischen sich aufnehmenden seitlichen Flanschen (155) versehen ist, deren Stirnflächen (156) bezüglich des Kniepunktes (144) exzentrisch verlaufen, und mit einem am oberen Arm (112.1) des am längeren Kniehebelarm (138.2) angelenkten Öffnungshebels (112) befestigten Klemmbacken (157) zur Arretierung der Öffnungshebel (112) in deren Schliessstellung zusammenwirkt.

6. Selbstfanghalsrahmen nach den Ansprüchen 1 und 5, dadurch gekennzeichnet, dass der Klemmbacken (157) auswechselbar befestigt ist.

7. Selbstfanghalsrahmen für grössere Tiere, insbesondere Rinder, mit einem in einem Tierstand aufhängbaren Traggestell (10); mit zwei in einer im wesentlichen vertikalen Ebene liegenden zweiarmigen Öffnungshebeln (12), die symmetrisch zu einer vertikalen Ebene angeordnet sind, welche auf der Ebene der Öffnungshebel (12) senkrecht steht, und welche an ihren oberen Enden (12.1) um zur Symmetrieebene parallele, im wesentlichen waagrechte Achsen (36) drehbar am Traggestell (10) gelagert sind; mit zwei in der Ebene der Öffnungshebel (12) symmetrisch zur Symmetrieebene angeordneten zweiarmigen Schliesshebeln (14), die mit ihren oberen Enden mit den unteren Enden (12.2) der Öffnungshebel (12) gelenkig verbunden und an ihren unteren Enden angelenkt sind, wobei die Anlenkungsstelle(n) (26) mittels eines biegsamen Stranges (18) mit dem Stallboden (20) verbunden ist/sind; mit einem am Traggestell (10) angeordneten Schloss (24) zum reversiblen Verriegeln der Öffnungshebel (12) in deren im wesentlichen vertikaler Schliessstellung und mit einem Seilzug (58) zum Entriegeln des Schlosses (24), welcher am Knie (44) eines Kniehebels (38) angreift, dessen Arme (38.1, 38.2) an den oberen Enden (12.1) der Öffnungshebel (12) oberhalb der Drehpunkte (36) dieser Öffnungshebel (12) angelenkt und im Schliesszustand gestreckt sind, wobei nach DE-Patent 33 22 217 die Kniehebelarme (38.1, 38.2) ungleich lang sind und der kürzere Arm (38.1) des Kniehebels (38) über dessen angenähert faltbares Knie (44) hinaus verlängert (50) ist; an der Verlängerung (50) des kürzeren Kniehebelarmes (38.1) ein kreisbogenförmiges Seilkurvenstück (54) so befestigt ist, dass der Kreiskurvenmittelpunkt mit dem Kniepunkt (44) zusammenfällt; und das Zugseil (58) bei geschlossenem Rahmen über das Kurvenstück (54) gelegt und am unteren Kurvenstückende befestigt ist, zur Aufhängung an einem Stallgerüst aus mehreren vertikalen Standrohren (66) und aus einem deren obere Enden verbindenden waagrechten Oberrohr (64), dadurch gekennzeichnet, dass das Zugseil (58) an seinem kurvenstückfernen Ende an einer waagrechten Bedienungsstange (62) für mehrere Rahmen festgelegt ist, welche in ihrer geraden Längsrichtung hin und her verschiebbar längs des Oberrohres (64) an diesem gelagert und mittels eines Handhebels (72) bewegbar ist.

8. Selbstfanghalsrahmen nach Anspruch 7, dadurch gekennzeichnet, dass an der beweglichen Bedienungsstange (62) und am festliegenden Oberrohr (64) eine Lasche (70) bzw. ein zweiarmiger Schwenkhebel (72) als Handhebel endseitig angelenkt sind, wobei die Lasche (70) ausserdem am Schwenkhebel (72) zwischen dessen beiden Enden angelenkt ist; und dass der Handhebel (72) über den Punkt der Anlenkung der Lasche (80) am Hebel (72) als Totpunkt hinaus beim Schwenken des Hebels (72) im Sinne einer Rahmenöffnung bewegbar ist, wobei der Schwenkhebel (72) auf einen Anschlag am Oberrohr (64) trifft.

9. Selbstfanghalsrahmen nach Anspruch 7 oder 8, dessen Traggestell (10) mittels zweier kurzer Kettenstücke (68) am Oberrohr (64) aufhängbar ist, dadurch gekennzeichnet, dass an der Aufhängungsstelle am Oberrohr (64) eine Führung für die Bedienungsstange (62) vorgesehen ist.

10. Selbstfanghalsrahmen nach einem der Ansprüche 7 bis 9, dadurch gekennzeichnet, dass zur Festlegung des Zugseiles (58) an der Bedienungsstange (62) eine Öse und ein Haken (60) vorgesehen sind.

11. Selbstfanghalsrahmen nach Anspruch 10, dadurch gekennzeichnet, dass der Haken (160) oder die Öse zur Festlegung des Zugseiles (158) längs der Bedienungsstange (162) verschiebbar an dieser festgelegt ist.

12. Selbstfanghalsrahmen nach einem der Ansprüche 7 und 9 bis 11, dadurch gekennzeichnet, dass als Hebel zum Bewegen der Bedienungsstange (162) eine Handkurbel (173) vorgesehen ist, welche die Welle (178) einer am Oberrohr (164) festgelegten Seilwinde (180) dreht, deren Seiltrommel (182) von zwei gegenläufig aufgewickelten Seilen (183 und 184) umschlungen ist, deren straffe freie Enden in einander entgegengesetzten Richtungen parallel zur Bedienungsstange (162) weisend an dieser festgelegt sind.

13. Selbstfanghalsrahmen nach Anspruch 12, dadurch gekennzeichnet, dass die Seilwinde (180) und/oder die freien Enden ihrer beiden Seile (183 und 184) längs der Bedienungsstange (162) verschiebbar an dieser festgelegt sind.

14. Selbstfanghalsrahmen nach Anspruch 12 oder 13, dadurch gekennzeichnet, dass die Seilwinde (180) ein Klinkengesperre (186) aufweist, dessen greifbare Druckklinke (187) mit einem auf der Trommelwelle (178) der Winde sitzenden, aussenverzahnten Sperr-Rad (188), eine Lockerung des gespannten Zugseiles (158) sperrend, zusammenwirkt.

15. Selbstfanghalsrahmen nach Anspruch 14, dadurch gekennzeichnet, dass das Klinkengesperre zur Verriegelung der Seiltrommel (182) im Schliess- und Öffnungszustand des Rahmens ausgebildet ist.

## Revendications

1. Collier d'auto-capture pour de gros animaux, en particulier des bovins, comportant un cadre porteur (10) pouvant être suspendu dans une étable; deux leviers d'ouverture (12) à deux branches situés dans un plan sensiblement vertical et disposés symétriquement par rapport à un plan vertical perpendiculaire au plan des leviers d'ouverture (12), tout en étant, au niveau de leurs extrémités supérieures (12.1), montés à rotation sur le cadre porteur (10) autour d'axes (36) sensiblement horizontaux, parallèles au plan de symétrie; deux leviers de fermeture (14) à deux branches disposés dans le plan des leviers d'ouverture (12) symétriquement par rapport au plan de symétrie, leviers de fermeture qui, au niveau de leurs extrémités supérieures, sont réunis par des articulations aux extrémités inférieures (12.2) des leviers d'ouverture (12) et qui sont articulés au niveau de leurs extrémités inférieures, le(s) point(s) d'articulation (26) étant relié(s) au sol de l'étable (20) au moyen d'un lien souple (18); un fermoir (24) disposé sur le cadre porteur (10) pour verrouiller de manière réversible les leviers d'ouverture (12) dans leur position de fermeture sensiblement verticale; et un câble tracteur (58) pour déverrouiller le fermoir (24), qui est en prise avec l'articulation (44) d'une genouillère (38) dont les bras (38.1, 38.2) sont articulés aux extrémités supérieures (12.1) des leviers d'ouverture (12) au-dessus du point de rotation (36) de ces leviers d'ouverture (12) et sont étirés à l'état fermé, les bras de genouillère (38.1, 38.2) étant, selon le brevet DE-33 22 217, de longueurs inégales et le bras le plus court (38.1) de la genouillère (38) se prolongeant (en 50) vers l'extérieur, au-delà de l'articulation (44) presque pliable de celle-ci; une pièce courbée (54) en forme d'arc de cercle étant fixée sur le prolongement (50) du bras de genouillère le plus court (38.1) de telle manière que son centre de courbure coïncide avec le point d'articulation (44); et le câble tracteur (58) se trouvant sur la pièce courbée (54) lorsque le collier est fermé et étant fixé à l'extrémité inférieure de la pièce courbée, caractérisé en ce que le cadre porteur (10) présente, pour former le point de rotation d'un levier d'ouverture (12), une rangée horizontale de perçages sensiblement horizontaux (34) destinés à recevoir sélectivement un pivot (36), et en ce que des perçages (32, 34), disposés à peu près symétriquement par rapport au plan de symétrie, sont respectivement occupés par des pivots (36), dont l'écartement horizontal détermine la largeur du collier fermé.

2. Collier d'auto-capture pour de gros animaux, en particulier des bovins, comportant un cadre porteur (10) pouvant être suspendu dans une étable; deux leviers d'ouverture (12) à deux branches situés dans un plan sensiblement vertical et disposés symétriquement par rapport à un plan vertical perpendiculaire au plan des leviers d'ouverture (12), tout en étant, au niveau de leurs extrémités supérieures (12.1), montés à rotation sur le cadre porteur (10) autour d'axes (36) sensiblement horizontaux, parallèles au plan de symétrie; deux leviers de fermeture (14) à deux branches disposés dans le plan des leviers d'ouverture (12) symétriquement par rapport au plan de symétrie, leviers de fermeture qui au niveau de leurs extrémités supérieures, sont réunis par des articulations aux extrémités inférieures (12.2) des leviers d'ouverture (12) et qui sont articulés au niveau de leurs extrémités inférieures, le(s) point(s) d'articulation (26) étant relié(s) au sol de l'étable (20) au moyen d'un lien souple (18); un fermoir (24) disposé sur le cadre porteur (10) pour verrouiller de manière réversible les leviers d'ouverture (12) dans leur position de fermeture sensiblement verticale; et un câble tracteur (58) pour déverrouiller le fermoir (24), qui est en prise avec l'articulation (44) d'une genouillère (38) dont les bras (38.1, 38.2) sont articulés aux extrémités supérieures (12.1) des leviers d'ouverture (12) au-dessus du point de rotation (36) de ces leviers d'ouverture (12) et sont étirés à l'état fermé, les bras de genouillère (38.1, 38.2) étant, selon le brevet DE-33 22 217, de longueurs inégales et le bras le plus court (38.1) de la genouillère (38) se prolongeant (en 50) vers l'extérieur, au-delà de l'articulation (44) presque pliable de celle-ci; une pièce courbée (54) en forme d'arc de cercle étant fixée sur le prolongement (50) du bras de genouillère le plus court (38.1) de telle manière que son centre de courbure coïncide avec le point d'articulation (44); et le câble tracteur (58) se trouvant sur la pièce courbée (54) lorsque le collier est fermé et étant fixé à l'extrémité inférieure de la pièce courbée, tandis que les deux leviers de fermeture (14) sont articulés, au niveau de leurs extrémités inférieures, aux extrémités supérieures d'un étrier en forme de U (16), dont l'arche (16.3) est reliée au sol de l'étable (20) au moyen du lien souple (18), caractérisé en ce que les extrémités supérieures de l'étrier (16), qui sont réunies par des articulations aux leviers de fermeture (14), sont formées respectivement d'une pièce de jonction sensiblement verticale (22) qui est fixée sur la face externe de chacun des montants (16.1, 16.2) de l'étrier, et dont la longueur est dimensionnée de telle sorte que les extrémités inférieures des leviers de fermeture (14), dans la position de fermeture sensiblement verticale de ceux-ci, se raccordent de manière presque continue aux extrémités supérieures des montants (16.1, 16.2) de l'étrier.

3. Collier d'auto-capture pour de gros animaux, en particulier des bovins, comportant un cadre porteur (10) pouvant être suspendu dans une étable; deux leviers d'ouverture (12) à deux branches situés dans un plan sensiblement vertical et disposés symétriquement par rapport à un plan vertical perpendiculaire au plan des leviers d'ouverture (12), tout en étant, au niveau de leurs extrémités supérieures (12.1), montés à rotation sur le cadre porteur (10) autour d'axes (36) sensiblement horizontaux, parallèles au plan de symétrie; deux leviers de fermeture (14) à deux branches disposés dans le plan des leviers d'ouverture (12) symétriquement par rapport au plan de symétrie, leviers de fermeture qui, au niveau de leurs extrémités supérieures, sont réunis par des articulations aux extrémités inférieures (12.2) des leviers d'ouverture (12) et qui sont articulés au niveau de leurs extrémités inférieures, le(s) point(s) d'articulation (26) étant relié(s) au sol de l'étable (20) au moyen d'un lien souple (18); un fermoir (24) disposé sur le cadre porteur (10) pour verrouiller de manière réversible les leviers d'ouverture (12) dans leur position de fermeture sensiblement verticale; et un câble tracteur (58) pour déverrouiller le fermoir (24), qui est en prise avec l'articulation (44) d'une genouillère (38) dont les bras (38.1, 38.2) sont articulés aux extrémités supérieures (12.1) des leviers d'ouverture (12) au-dessus du point de rotation (36) de ces leviers d'ouverture (12) et sont étirés à l'état fermé, les bras de genouillère (38.1, 38.2) étant, selon le brevet DE-33 22 217, de longueurs inégales et le bras le plus court (38.1) de la genouillère (38) se prolongeant (en 50) vers l'extérieur, au-delà de l'articulation (44) presque pliable de celle-ci; une pièce courbée (54) en forme d'arc de cercle étant fixée sur le prolongement (50) du bras de genouillère le plus court (38.1) de telle manière que son centre de courbure coïncide avec le point d'articulation (44); et le câble tracteur (58) se trouvant sur la pièce courbée (54) lorsque le collier est fermé et étant fixé à l'extrémité inférieure de la pièce courbée, caractérisé en ce que les deux leviers de fermeture (114) sont articulés l'un à l'autre au niveau de leurs extrémités inférieures au moyen d'un pivot (117) dont l'axe est perpendiculaire au plan des leviers d'ouverture (112); et en ce que le pivot (117) est relié au sol de l'étable (120) au moyen du lien souple (118), tendu lorsque le collier est ouvert.

4. Collier d'auto-capture selon la revendication 2 ou 3, caractérisé en ce que le bras le plus long (138.2) de la genouillère (138) se prolonge (en 176) au-delà de l'articulation (144) de celle-ci et en ce que le prolongement (176) vient en butée contre une vis de réglage (174).

5. Collier d'auto-capture pour de gros animaux, en particulier des bovins, comportant un cadre porteur (10) pouvant être suspendu dans une étable; deux leviers d'ouverture (12) à deux branches situés dans un plan sensiblement vertical et disposés symétriquement par rapport à un plan vertical perpendiculaire au plan des leviers d'ouverture (12), tout en étant, au niveau de leurs extrémités supérieures (12.1), montés à rotation sur le cadre porteur (10) autour d'axes (36) sensiblement horizontaux, parallèles au plan de symétrie; deux leviers de fermeture (14) à deux branches disposés dans le plan des leviers d'ouverture (12) symétriquement par rapport au plan de symétrie, leviers de fermeture qui, au niveau de leurs extrémités supérieures, sont réunis par des articulations aux extrémités inférieures (12.2) des leviers d'ouverture (12) et qui sont articulés au niveau de leurs extrémités inférieures, le(s) point(s) d'articulation (26) étant relié(s) au sol de l'étable (20) au moyen d'un lien souple (18); un fermoir (24) disposé sur le cadre porteur (10) pour verrouiller de manière réversible les leviers d'ouverture (12) dans leur position de fermeture sensiblement verticale; et un câble tracteur (58) pour déverrouiller le fermoir (24), qui est en prise avec l'articulation (44) d'une genouillère (38) dont les bras (38.1, 38.2) sont articulés aux extrémités supérieures (12.1) des leviers d'ouverture (12) au-dessus du point de rotation (36) de ces leviers d'ouverture (12) et sont étirés à l'état fermé, les bras de genouillère (38.1, 38.2) étant, selon le brevet DE-33 22 217, de longueurs inégales et le bras le plus court (38.1) de la genouillère (38) se prolongeant (en 50) vers l'extérieur, au-delà de l'articulation (44) presque pliable de celle-ci; une pièce courbée (54) en forme d'arc de cercle étant fixée sur le prolongement (50) du bras de genouillère le plus court (38.1), de telle manière que son centre de courbure coïncide avec le point d'articulation (44); et le câble tracteur (58) se trouvant au-dessus de la pièce courbée (54) lorsque le collier est fermé et étant fixé à l'extrémité inférieure de la pièce courbée, caractérisé en ce que la pièce courbée (154) en forme d'arc de cercle est pourvue de deux rebords latéraux (155) qui retiennent le câble tracteur (158) entre eux et dont les surfaces frontales (156) sont excentrées vis-à-vis du point d'articulation (144) et coopère avec une mâchoire de serrage (157) fixée sur le bras supérieur (112.1) du levier d'ouverture (112) articulé avec le bras de genouillère le plus long (138.2) pour bloquer les leviers d'ouverture (112) dans leur position de fermeture.

6. Collier d'auto-capture selon les revendications 1 et 5, caractérisé en ce que la mâchoire de serrage (157) est fixée de manière amovible.

7. Collier d'auto-capture pour de gros animaux, en particulier des bovins, comportant un cadre porteur (10) pouvant être suspendu dans une étable; deux leviers d'ouverture (12) à deux branches situés dans un plan sensiblement vertical et disposés symétriquement par rapport à un plan vertical perpendiculaire au plan des leviers d'ouverture (12), tout en étant, au niveau de leurs extrémités supérieures (12.1), montés à rotation sur le cadre porteur (10) autour d'axes (36) sensiblement horizontaux, parallèle au plan de symétrie; deux leviers de fermeture (14) à deux branches disposés dans le plan des leviers d'ouverture (12) symétriquement par rapport au plan de symétrie, leviers de fermeture qui, au niveau de leurs extrémités supérieures, sont réunis par des articulations aux extrémités inférieures (12.2) des leviers d'ouverture (12) et qui sont articulés au niveau de leurs extrémités inférieures, le(s) point(s) d'articulation (26) étant relié(s) au sol de l'étable (20) au moyen d'un lien souple (18); un fermoir (24) disposé sur le cadre porteur (10) pour verrouiller de manière réversible les leviers d'ouverture (12) dans leur position de fermeture sensiblement verticale; et un câble tracteur (58) pour déverrouiller le fermoir (24), qui est en prise avec l'articulation (44) d'une genouillère (38) dont les bras (38.1, 38.2) sont articulés aux extrémités supérieures (12.1) des leviers d'ouverture (12) au-dessus du point de rotation (36) de ces leviers d'ouverture (12) et sont étirés à l'état fermé, les bras de genouillère (38.1, 38.2) étant, selon le brevet DE-33 22 217, de longueurs inégales et le bras le plus court (38.1) de la genouillère (38) se prolongeant (en 50) vers l'extérieur au-delà de l'articulation (44) presque pliable de celle-ci; une pièce courbée (54) en forme d'arc de cercle étant fixée sur le prolongement (50) du bras de genouillère le plus court (38.1) de telle manière que son centre de courbure coïncide avec le point d'articulation (44); et le câble tracteur (58) se trouvant au-dessus de la pièce courbée (54) lorsque le collier est fermé et étant fixé à l'extrémité inférieure de la pièce courbée, pour être suspendu à une charpente d'étable constituée de plusieurs montants tubulaires verticaux (66) et d'un élément tubulaire supérieur horizontal (64) relié aux extrémités supérieures de ceux-ci, caractérisé en ce que le câble tracteur (58) est fixé, au niveau de son extrémité éloignée de la pièce courbée, à une tige de commande horizontale (62) associée à plusieurs colliers, laquelle est montée sur l'élément tubulaire supérieur (64) de façon à pouvoir coulisser dans un sens et dans l'autre dans sa direction longitudinale rectiligne le long de celui-ci et peut être manœuvrée au moyen d'un levier à main (72).

8. Collier d'auto-capture selon la revendication 7, caractérisé en ce qu'une barre de liaison (70) ou respectivement un levier pivotant à deux branches (72) formant levier à main sont articulés, du côté de leurs extrémités, avec la tige de commande (62) mobile et avec l'élément tubulaire supérieur (64) fixe, la barre de liaison (70) étant en outre articulée avec le levier pivotant (72) entre les deux extrémités de celui-ci; et en ce que le levier à main (72) est déplaçable au-delà du point d'articulation (80) de la barre de liaison avec le levier (72), formant point mort, lors du pivotement du levier (72) dans le sens d'un ouverture du collier, le levier pivotant (72) rencontrant une butée prévue sur l'élément tubulaire supérieur (64).

9. Collier d'auto-capture selon la revendication 7 ou 8, dont le cadre porteur (10) peut être suspendu à l'élément tubulaire supérieur (64) au moyen de deux tronçons de chaîne courts (68), caractérisé en ce qu'un guidage est prévu pour la tige de commande (62) au niveau du point de suspension situé sur l'élément tubulaire supérieur (64).

10. Collier d'auto-capture selon l'une des revendications 7 à 9, caractérisé en ce qu'un anneau et un crochet (60) sont prévus pour fixer le câble tracteur (58) à la tige de commande (62).

11. Collier d'auto-capture selon la revendication 10, caractérisé en ce que le crochet (160) ou l'anneau prévu pour fixer le câble tracteur (158) est fixé sur la tige de commande (162) avec une possibilité de coulissement le long de celle-ci.

12. Collier d'auto-capture selon l'une des revendications 7 et 9 à 11, caractérisé en ce que, comme levier pour manœuvrer la tige de commande (162), il est prévu une manivelle (173) qui fait tourner l'arbre (178) d'un treuil à câble (180) fixé sur l'élément tubulaire supérieur (164) et dont le tambour d'enroulement (182) est enveloppé par deux câbles (183 et 184), enroulés en sens inverse l'un par rapport à l'autre, et dont les extrémités libres, tendues et dirigées dans des directions opposées l'une à l'autre parallèlement à la tige de commande (162), sont fixées à celle-ci.

13. Collier d'auto-capture selon la revendication 12, caractérisé en ce que le treuil à câble (180) et/ou les extrémités libres de ses deux câbles (183 et 184) sont fixés sur la tige de commande (162) à coulissement le long de celle-ci.

14. Collier d'auto-capture selon la revendication 12 ou 13, caractérisé en ce que le treuil à câble (180) est pourvu d'un dispositif de verrouillage à cliquet (186), dont le cliquet d'appui encliquetable (187) coopère en la bloquant avec une roue d'arrêt (188) à denture externe calée sur l'arbre du tambour (178) du treuil, pour relâcher le câble tracteur (158) tendu.

15. Collier d'auto-capture selon la revendication 14, caractérisé en ce que le dispositif de verrouillage à cliquet est conçu pour verrouiller le tambour d'enroulement (182), dans les états de fermeture et d'ouverture du collier.

**Claims**

1. Self-trapping neck frame for large animals, in particular cattle, comprising a support (10) designed to be suspended in a stall; further comprising two two-armed opening levers (12) arranged in a substantially vertical plane symmetrically on either side of another vertical plane which is perpendicular to the plane of the opening levers (12), which opening levers are mounted at their top ends (12.1) on the support (10) so as to be rotatable thereon about substantially horizontal pins (36) which lie parallel to the plane of symmetry; further comprising two two-armed closing levers (14) arranged in the plane of the opening levers (12) and symmetrically on either side of the plane of symmetry, which closing levers are pivotally connected at their top ends to the lower ends (12.2) of the opening levers (12) and are pivoted at the lower ends, the point or points (26) of pivotal connection being connected to the floor (20) of the stable by a flexible strand (18); and comprising a lock (24) on the support (10) for reversibly locking the opening levers (12) in their substantially vertical closing position, and comprising a cable (58) for opening the lock (24), which cable acts on the knee (44) of a toggle lever (38), the arms (38.1, 38.2) of which lever are pivoted to the upper ends (12.1) of the opening levers (12) above the pivot (36) of these opening levers (12) and are extended when in the closing position; and according to DE Patent 33 22 217 the arms (38.1, 38.2) of the toggle lever are unequal in length and the shorter arm (38.1) of the toggle lever (38) extends (50) beyond the substantially foldable knee (44) of the lever; and a curved cable holder (54) in the form of a circular arc is fixed in such a manner to the extension (50) of the shorter arm (38.1) of the toggle lever that the centre of the arc coincides with the knee (44); and when the frame is closed, the cable (58) is placed over the curved piece (54) and attached to the lower end of said piece, characterised in that the support (10) has a horizontal row of substantially horizontal bores (34) for the pivot of an opening lever (12) for selectively receiving a pivot pin (36), and in that the bores (32, 34) arranged more or less symmetrically to the plane of symmetry are occupied each by a pivot pin (36), the horizontal distance between which pins determines the width of the neck opening of the closed frame.

2. Self-trapping neck frame for large animals, in particular cattle, comprising a support (10) designed to be suspended in a stall; further comprising two two-armed opening levers (12) arranged in a substantially vertical plane symmetrically on either side of another vertical plane which is perpendicular to the plane of the opening levers (12), which opening levers are mounted at their top ends (12.1) on the support (10) so as to be rotatable thereon about susbtantially horizontal pins (36) which lie parallel to the plane of symmetry; further comprising two two-armed closing levers (14) arranged in the plane of the opening levers (12) and symmetrically on either side of the plane of symmetry, which closing levers are pivotally connected at their top ends to the lower ends (12.2) of the opening levers (12) and are pivoted at the lower ends, the point or points (26) of pivotal connection being connected to the floor (20) of the stable by a flexible strand (18); and comprising a lock (24) on the support (10) for reversibly locking the opening levers (12) in their substantially vertical closing position, and comprising a cable (58) for opening the lock (24), which cable acts on the knee (44) of a toggle lever (38), the arms (38.1, 38.2) of which lever are pivoted to the upper ends (12.1) of the opening levers (12) above the pivot (36) of these opening levers (12) and are extended when in the closing position; and according to DE Patent 33 22 217 the arms (38.1, 38.2) of the toggle lever are unequal in length and the shorter arm (38.1) of the toggle lever (38) extends (50) beyond the substantially foldable knee (44) of the lever; and a curved cable holder (54) in the form of a circular arc is fixed in such a manner to the extension (50) of the shorter arm (38.1) of the toggle lever that the centre of the arc coincides with the knee (44); and when the frame is closed, the cable (58) is placed over the curved piece (54) and attached to the lower end of said piece, and wherein both closing levers (14) are pivoted at their lower ends to the upper ends of a U-shaped stirrup (16) the yoke (16.3) of which stirrup is connected to the floor (20) of the stable by the flexible strand (18), characterised in that the upper ends of the stirrup (16), which are pivotally connected to the closing levers (14), are each formed by a substantially vertical connecting piece (22) which is attached to the external surface of each stirrup arm (16.1, 16.2) and is of such a length that when the closing levers are in their substantially vertical closing position, the lower ends of said levers (14) are almost continuous with the upper ends of the stirrup arms (16.1, 16.2).

3. Self-trapping neck frame for large animals, in particular cattle, comprising a support (10) designed to be suspended in a stall; further comprising two two-armed opening levers (12) arranged in a substantially vertical plane symmetrically on either side of another vertical plane which is perpendicular to the plane of the opening levers (12), which opening levers are mounted at their top ends (12.1) on the support (10) so as to be rotatable thereon about substantially horizontal pins (36) which lie parallel to the plane of symmetry; further comprising two two-armed closing levers (14) arranged in the plane of the opening levers (12) and symmetrically on either side of the plane of symmetry, which closing levers are pivotally connected at their top ends to the lower ends (12.2) of the opening levers (12) and are pivoted at the lower ends, the point or points (26) of pivotal connection being connected to the floor (20) of the stable by a flexible strand (18); and comprising a lock (24) on the support (10) for reversibly locking the opening levers (12) in their substantially vertical closing position, and comprising a cable (58) for opening the lock (24), which cable acts on the knee (44) of a toggle lever (38), the arms (38.1, 38.2) of which lever are pivoted to the upper ends (12.1) of the opening levers (12) above the pivot (36) of these opening levers (12) and are extended when in the closing position; and according to DE Patent 33 22 217 the arms (38.1, 38.2) of the toggle lever are unequal in length and the shorter arm (38.1) of the toggle lever (38) extends (50) beyond the susbtantially foldable knee (44) of the lever; and a curved cable holder (54) in the form of a circular arc is fixed in such a manner to the extension (50) of the shorter arm (38.1) of the toggle lever that the centre of the arc coincides with the knee (44); and when the frame is closed, the cable (58) is placed over the curved piece (54) and attached to the lower end of said piece, characterised in that the two closing levers (114) are pivotally connected to one another at their lower ends by means of a pivot pin (117) which has its axis disposed perpendicularly to the plane of the opening levers (112); and in that the pivot pin (117) is rigidly connected to the floor (120) of the stable by the flexible strand (118) when the frame is open.

4. Self-trapping neck frame according to one of claims 2 or 3, characterised in that the longer arm (138.2) of the toggle lever (138) extends (176) beyond the knee (144) of the lever and in that the extension (176) abuts against an adjustment screw (174).

5. Self-trapping neck frame for large animals, in particular cattle, comprising a support (10) designed to be suspended in a stall; further comprising two two-armed opening levers (12) arranged in a substantially vertical plane symmetrically on either side of another vertical plane which is perpendicular to the plane of the opening levers (12), which opening levers are mounted at their top ends (12.1) on the support (10) so as to be rotatable thereon about substantially horizontal pins (36) which lie parallel to the plane of symmetry; further comprising two two-armed closing levers (14) arranged in the plane of the opening levers (12) and symmetrically on either side of the plane of symmetry, which closing levers are pivotally connected at their top ends to the lower ends (12.2) of the opening levers (12) and are pivoted at the lower ends, the point or points (26) of pivotal connection being connected to the floor (20) of the stable by a flexible strand (18); and comprising a lock (24) on the support (10) for reversibly locking the opening levers (12) in their substantially vertical closing position, and comprising a cable (58) for opening the lock (24), which cable acts on the knee (44) of a toggle lever (38), the arms (38.1, 38.2) of which lever are pivoted to the upper ends (12.1) of the opening levers (12) above the pivot (36) of these opening levers (12) and are extended when in the closing position; and according to DE Patent 33 22 217 the arms (38.1, 38.2) of the toggle lever are unequal in length and the shorter arm (38.1) of the toggle lever (38) extends (50) beyond the substantially foldable knee (44) of the lever; and a curved cable holder (54) in the form of a circular arc is fixed in such a manner to the extension (50) of the shorter arm (38.1) of the toggle lever that the centre of the arc coincides with the knee (44); and when the frame is closed, the cable (58) is placed over the curved piece (54) and attached to the lower end of said piece, characterised in that the cable holder piece (154) in the form of a circular arc has two lateral flanges (155) receiving the cable (158) between them, the end faces (156) of which flanges are eccentric with respect to the toggle knee (144), and said curved member (154) cooperates with a clamping jaw (157) fixed to the upper arm (112.1) of the opening lever (112) pivoted to the longer toggle lever arm (138.2) so as to stop the opening lever (112) in the closing position.

6. Self-trapping neck frame according to claims 1 and 5, characterised in that the clamping jaw (157) is mounted replaceably.

7. Self-trapping neck frame for large animals, in particular cattle, comprising a support (10) designed to be suspended in a stall; further comprising two two-armed opening levers (12) arranged in a substantially vertical plane symmetrically on either side of another vertical plane which is perpendicular to the plane of the opening levers (12), which opening levers are mounted at their top ends (12.1) on the support (10) so as to be rotatable thereon about substantially horizontal pins (36) which lie parallel to the plane of symmetry; further comprising two two-armed closing levers (14) arranged in the plane of the opening levers (12) and symmetrically on either side of the plane of symmetry, which closing levers are pivotally connected at their top ends to the lower ends (12.2) of the opening levers (12) and are pivoted at the lower ends, the point or points (26) of pivotal connection being connected to the floor (20) of the stable by a flexible strand (18); and comprising a lock (24) on the support (10) for reversibly locking the opening levers (12) in their substantially vertical closing position, and comprising a cable (58) for opening the lock (24), which cable acts on the knee (44) of a toggle lever (38), the arms (38.1, 38.2) of which lever are pivoted to the upper ends (12.1) of the opening levers (12) above the pivot (36) of these opening levers (12) and are extended when in the closing position; and according to DE Patent 33 22 217 the arms (38.1, 38.2) of the toggle lever are unequal in length and the shorter arm (38.1) of the toggle lever (38) extends (50) beyond the substantially foldable knee (44) of the lever; and a curved cable holder (54) in the form of a circular arc is fixed in such a manner to the extension (50) of the shorter arm (38.1) of the toggle lever that the centre of the arc coincides with the knee (44); and when the frame is closed, the cable (58) is placed over the curved piece (54) and attached to the lower end of said piece, for suspension on a stable scaffold composed of several vertical standpipes (66) and a horizontal upper pipe (64) connecting the top ends of said pipes (66), characterised in that the cable (58) is fixed at its end remote from the curved piece to a horizontal operating rod (62) for several frames, which rod is mounted on the upper pipe (64) to be movable to and fro thereon in its straight longitudinal direction and is displaceable by means of a manual lever (72).

8. Self-trapping neck frame according to claim 7, characterised in that a link plate (70) and a two-armed rocking lever (72) serving as manual lever are pivoted at one end to the movable operating rod (62) and the fixed upper pipe (64), the link plate (70) being in addition pivoted to the rocking lever (72) between its two ends; and in that when the manual lever (72) is rocked to open the frame, it is capable of moving beyond the point at which the link plate (70) is pivoted to the lever (72), i.e. the dead point, and abuts against a stop on the upper pipe (64).

9. Self-trapping neck frame according to claim 7 or claim 8, in which the support (10) is designed to be suspended to the upper pipe (64) by means of two short chain (68), characterised in that a guide for the operating rod (62) is provided at the point of suspension to the upper pipe (64).

10. Self-trapping frame according to one of the claims 7 to 9, characterised in that a hook and eye (60) are provided for fixing the cable (58) to the operating rod (62).

11. Self-trapping neck frame according to claim 10, characterised in that the hook (160) or the eye for fixing the cable (158) is mounted on the operating rod (162) so as to be displaceable along said rod (162).

12. Self-trapping neck frame according to one of the claims 7 and 9 to 11, characterised in that the lever provided for displacing the operating rod (162) is a hand crank (173) which rotates the shaft (178) of a cable winch (180) fixed to the upper pipe (164), two cables (183 and 184) being wound in opposite directions round the cable drum (182) of the winch (180), the taut, free ends of said cables (183 and 184) extending in opposite directions parallel to the operating rod (162) and being fixed to said rod (162).

13. Self-trapping neck frame according to claim 12, characterised in that the cable winch (180) and/or the free ends of their two cables (183 and 184) are attached to the operating rod (162) so as to be displaceable thereon.

14. Self-trapping neck frame according to claim 12 or 13, characterised in that the cable winch (180) has a ratchet lock (186) the manually accessible pressure pawl (187) of which cooperates with an externally toothed ratchet wheel (188) mounted on the drum shaft (178) of the winch to lock a slackening of the taut cable (158).

15. Self-trapping neck frame according to claim 14, characterised in that the ratchet lock is designed to lock the cable drum (182) in the closed and open position of the frame.

Fig.1

0 131 777

Fig.4

Fig.2

Fig.3

Fig.5

# FIG. 6

# FIG. 7

# FIG. 8

# FIG. 9